# EUROPÄISCHE PATENTSCHRIFT

(11) **EP 2 557 242 B1**
(45) Veröffentlichungstag und Bekanntmachung des Hinweises auf die Patenterteilung: **22.06.2016**
(21) Anmeldenummer: 12177664.5
(22) Anmeldetag: 24.07.2012
(51) Int. Cl.: E03D 3/06, F16K 21/06, F16K 31/48, F16K 31/53, E03D 5/02, E03D 5/10

(54) **Manuell zu betätigendes Servoventil, insbesondere zur Druckspülung eines Urinals**
Manually operated servo valve, in particular for pressure flushing a urinal
Servosoupape à actionnement manuel, notamment pour le rinçage par pression d'un urinoir

(30) Priorität: 10.08.2011 DE 202011104220 U
(43) Veröffentlichungstag der Anmeldung: 13.02.2013
(73) Patentinhaber: Viega GmbH & Co. KG, 57439 Attendorn (DE)
(72) Erfinder: Wessel, Heinz-Werner, 58840 Plettenberg (DE)
(74) Vertreter: Cohausz & Florack

(56) Entgegenhaltungen:
- EP-A2- 0 825 370
- CH-A- 126 034
- DE-A1- 3 811 358
- GB-A- 538 889
- US-A- 3 638 682
- US-A- 6 019 343
- US-B1- 6 286 533

## Beschreibung

Die Erfindung betrifft ein manuell zu betätigendes Servoventil für Flüssigkeiten, mit einem Ventilgehäuse und einem zwischen einem Eingangskanal und einem Ausgangskanal angeordneten Ventilsitz, der durch ein vorzugsweise aus einer Membran gebildetes erstes Schließteil verschließbar ist, und mit einer Steuerkammer, die über eine Steueröffnung mit dem Eingangskanal kommuniziert und die zu ihrer Druckentlastung über ein Pilotventil, das ein zweites Schließteil aufweist, mit einer Druckentlastungskammer in Verbindung steht, die über einen Druckentlastungskanal mit dem Ausgangskanal kommuniziert, wobei das zweite Schließteil mit einem Betätigungselement gekoppelt ist, das bewegbar an dem Ventilgehäuse gehalten und durch eine Feder beaufschlagt ist, welche das Betätigungselement in eine Ausgangsstellung vorspannt, wobei an dem Betätigungselement ein Stellelement gehalten ist, mittels dem sich ein Wegmaß des Betätigungselements einstellen und/oder die Feder spannen lässt, wobei das Betätigungselement mit einem gegen die Kraft der Feder wirkenden Bewegungsdämpfer gekoppelt ist, und wobei der Bewegungsdämpfer als Rotationsdämpfer ausgebildet ist.

Servogesteuerte Selbstschlussventile - auch kurz Servoventile genannt - der oben genannten Art kommen bei hydraulisch gesteuerten automatisch schließenden Armaturen zum Einsatz, beispielsweise in Druckspülerarmaturen von WC-Becken, Urinalen, Waschbecken oder öffentlichen Duschen. In solchen Ventilen ist ein wasserdruckbeaufschlagter Ventilteil durch ein erstes Schließteil in Form eines Kolbens oder einer Membran in eine Ventilkammer und eine Steuerkammer (Druckkammer) unterteilt. Dabei ist die wasserbeaufschlagte Kolben- oder Membranfläche steuerkammerseitig größer als auf der Seite der Ventilkammer, wodurch die Schließfunktion des Ventils sichergestellt wird. Die Steuerkammer steht über ein Pilotventil (Entlastungsventil) mit einer Druckentlastungskammer in Verbindung, die über einen Druckentlastungskanal mit dem Ausgangskanal des Servoventils kommuniziert. Des Weiteren kommuniziert die Steuerkammer über eine Steueröffnung (Düse) mit dem Eingangskanal. Bei Betätigung des Servoventils öffnet das Pilotventil, wodurch die Steuerkammer entlastet wird, was zu einer zumindest teilweisen Entleerung der Steuerkammer führt. Die Membran oder der Kolben hebt dadurch von ihrem bzw. seinem Ventilsitz ab, so dass das Servoventil geöffnet ist. Nach Betätigung des Servoventils schließt dieses nach Ablauf einer gewissen Zeit automatisch, wobei die Steuerkammer über die Steueröffnung mit Wasser aus dem Eingangskanal aufgefüllt wird, bis der Flüssigkeitsdruck in der Steuerkammer wieder das der Schließstellung des Servoventils entsprechende Ausgangsniveau erreicht.

Die Schließzeit derartiger Servoventile und damit die pro Betätigung abgegebene Flüssigkeitsmenge ist abhängig von der Dauer der Wiederbefüllung der Steuerkammer nach einem Spülvorgang. Diese Dauer ist wiederum abhängig vom Volumen der Steuerkammer, vom Öffnungsweg der Membran bzw. des Kolbens, von der freien Querschnittsfläche der Steueröffnung sowie vom Wasserdruck im jeweiligen Wassernetz.

Der Öffnungsweg des Kolbens lässt sich zum Beispiel verändern, wenn der Auslösemechanismus des Servoventils, der üblicherweise als Auslösehebel oder Druckschalter ausgeführt ist, über eine Gewindestange mit dem Kolben verbunden ist. Der Kolbenweg ist in diesem Fall durch den Hub des Auslösemechanismus bestimmt. Um die Dauer der Wiederbefüllung der Steuerkammer zu beeinflussen, kann der Hub des Auslösemechanismus mittels einer Verstelleinrichtung, beispielsweise der Gewindestange entsprechend verlängert oder verkürzt werden. Bei Servoventilen, deren Kolben oder Membran nicht fest mit dem Auslösemechanismus verbunden ist, lässt sich die Dauer der Wiederbefüllung der Steuerkammer üblicherweise mittels einer in die Steuerkammer vorstehenden Stellschraube beeinflussen, die einen Anschlag definiert und den Öffnungsweg der Membran bzw. des Kolbens begrenzt (vgl. z.B. DE 10 2007 010 669 A1). Bei manchen Servoventilen ist die Stellschraube vollständig innerhalb des Ventilgehäuses angeordnet und somit für Einstellungen im montierten Zustand des Servoventils unzugänglich (vgl. z.B. DE 1 980 196 U).

Des Weiteren ist es bei Servoventilen bekannt, im Bereich eines die Steuerkammer mit dem Eingangskanal verbindenden Wasserkanals ein Druckregulierelement (Drosselelement) vorzusehen, mittels dem der freie Strömungsquerschnitt des Wasserkanals verändert werden kann (vgl. z.B. EP 2 169 288 A1).

Die vorgenannten bekannten Einstellmittel ermöglichen jedoch nur eine sehr beschränkte Beeinflussung der Dauer der Wiederbefüllung der Steuerkammer und der pro Betätigung des Servoventils abgegebenen Spülmenge.

Die US 6 286 533 B1 beschreibt ein Servoventil für sanitäre Anwendungen, dessen Ventilkörper durch einen Dämpfungsmechanismus gesteuert geschlossen wird, wobei der Dämpfungsmechanismus im Wesentlichen unabhängig von typischen Abweichungen hinsichtlich der Temperatur und des Druckes des zugeführten Leitungswassers funktioniert. Der Dämpfungsmechanismus weist hierzu einen biegestarren Einsatz auf, der beispielsweise aus Metall hergestellt ist und mit einer Betätigungsstange fest verbunden ist. An dem biegestarren Einsatz ist ein flexibles Element aus Gummi gehalten, das ring- bzw. topfförmig ausgebildet ist und an seinem Außenumfang einen abgewinkelten Kragen aufweist, welcher die Innenseite einer Innenhülse berührt. In der Innenwandung der Innenhülse ist ein axial verlaufender Kanal ausgebildet. Eine Schraubenfeder drückt die Betätigungsstange gegen eine manuell zu betätigenden Druckkappe des Servoventils. Ferner drückt die Feder den Ventilkörper in dessen Schließstellung. Des Weiteren ist die Feder in Verbindung mit dem Dämpfungsmechanismus und dem Kanal ausgebildet, um die Zykluszeit des Servoventils und den Kraftaufwand zur Betätigung des Servoventils vorzugeben.

Auch aus der US 3 638 682 A und der DE 38 11 358 A1 ist es bekannt, Servoventile für sanitäre Anwendungen mit einem Bewegungsdämpfer bzw. Verzögerungsglied zu versehen. Aus der US 3 638 682 A ist zudem die Verwendung eines Rotationsdämpfers bekannt, der eine Silikonflüssigkeit enthält.

Der vorliegenden Erfindung lag die Aufgabe zugrunde, ein manuell zu betätigendes Servoventil zur Verfügung zu stellen, welches eine in einem relativ großen Bereich einstellbare Spülmenge ermöglicht, zum Beispiel eine Spülmenge im Bereich von 0,5 bis 2 Liter oder im Bereich von 0,5 bis 4 Liter, und sich durch eine zuverlässige Funktionsweise auszeichnet.

Diese Aufgabe wird durch ein Servoventil mit den Merkmalen des Anspruchs 1 gelöst. Weitere bevorzugte und vorteilhafte Ausgestaltungen des erfindungsgemäßen Servoventils sind in den Unteransprüchen angegeben.

Das erfindungsgemäße Servoventil ist dadurch gekennzeichnet, dass das Betätigungselement eine Verzahnung aufweist, die sich entlang eines Teilabschnitts desselben erstreckt und durch Bewegen des Betätigungselements relativ zu dem Ventilgehäuse mit einem mit dem Bewegungsdämpfer drehbar verbundenen Ritzel in Eingriff bringbar ist. Hierdurch lässt sich eine zuverlässige mechanische Kopplung von Betätigungselements und Bewegungsdämpfer sicherstellen.

Der Bewegungsdämpfer stellt in Kombination mit der Feder ein Zeitglied dar, mit welchem sich eine relativ große Spülmenge einstellen lässt. Die Spülmenge kann dabei insbesondere auch durch unterschiedlich weite Bewegungen des Betätigungselements beeinflusst bzw. eingestellt werden. Ferner lassen sich der Bewegungsdämpfer und die Feder bei dem erfindungsgemäßen Servoventil gut zugänglich außerhalb des eigentlichen Ventilgehäuses anordnen.

In einer bevorzugten Ausgestaltung des erfindungsgemäßen Servoventils ist dessen Betätigungselement länglich ausgebildet und in Richtung seiner Längsachse in einer mit dem Ventilgehäuse verbundenen Halterung verschiebbar geführt. Alternativ kann das Betätigungselement aber auch kreisförmig ausgebildet und in einer mit dem Ventilgehäuse verbundenen Halterung dreh- oder schwenkbar geführt sein. Diese Ausgestaltungen tragen jeweils zu einer zuverlässigen Funktion des erfindungsgemäßen Servoventils, insbesondere seines Betätigungselements bei. Zudem sind diese Ausgestaltungen jeweils auch in Bezug auf die Fertigungsmontage des erfindungsgemäßen Servoventils günstig.

Nach einer weiteren vorteilhaften Ausgestaltung ist vorgesehen, dass das Betätigungselement neben der Verzahnung einen verzahnungsfreien Bereich aufweist, der sich in der Ausgangsstellung des Betätigungselements auf Höhe des Ritzels befindet. Hierdurch wird bewirkt, dass die Verzahnung kurz bevor das Betätigungselement seine Ausgangsstellung erreicht außer Eingriff des Ritzels gelangt und das federbeaufschlagte Betätigungselement dann in die Ausgangsstellung zurückschnellt. Die Kraft der Feder kann dabei über eine Schaltfläche auf das Schließelement des Pilotventils übertragen werden.

Nach einer weiteren bevorzugten Ausgestaltung des erfindungsgemäßen Servoventils ist das Stellelement aus einer Stellschraube gebildet, die in eine Gewindebohrung eingeschraubt ist, die in einer mit dem Betätigungselement verbundenen Stellschrauben-Halterung ausgebildet ist. Diese Ausgestaltung ermöglicht eine gut zugängliche Anordnung des Stellelements außerhalb des Ventilgehäuses.

Eine weitere bevorzugte Ausgestaltung des erfindungsgemäßen Servoventils sieht vor, dass das Betätigungselement eine Gewindebohrung aufweist, in die eine an der Feder angreifende Gewindestange eingedreht ist. Diese Ausgestaltung ermöglicht eine Einstellung der auf das Betätigungselement wirkenden Federkraft. Die mittels der Gewindestange eingestellte Federkraft beeinflusst in Kombination mit der Dämpfungsrate des Bewegungsdämpfers die Dauer bzw. Verzögerung der Rückwärtsbewegung des Betätigungselements in seine Ausgangsstellung.

Eine weitere vorteilhafte Ausgestaltung des erfindungsgemäßen Servoventils ist dadurch gekennzeichnet, dass der Bewegungsdämpfer eine Einstellvorrichtung zur Veränderung seiner Dämpfungsrate aufweist. Hierdurch lässt sich die Dauer bzw. Verzögerung der Rückwärtsbewegung des Betätigungselements in die Ausgangsstellung ebenfalls beeinflussen.

In weiterer Ausgestaltung der Erfindung ist der Bewegungsdämpfer des erfindungsgemäßen Servoventils vorzugsweise als alternierend wirkender Bewegungsdämpfer ausgeführt. In diesem Fall kann die Dämpfungswirkung (Bremswirkung) des Bewegungsdämpfers ausschließlich mit der Rückwärtsbewegung des Betätigungselements in die Ausgangsstellung verbunden werden. Die Betätigung des Betätigungselements wird dann im Wesentlichen nicht durch den Bewegungsdämpfer erschwert.

Eine weitere vorteilhafte Ausgestaltung des erfindungsgemäßen Servoventils sieht vor, dass das Schließteil des Pilotventils über einen schwenkbar gelagerten Schalthebel mit dem Betätigungselement gekoppelt ist, wobei das Schließteil des Pilotventils an einem ersten Endabschnitt des Schalthebels angreift, und wobei an dem Betätigungselement eine Schaltfläche ausgebildet ist, die in der Ausgangsstellung des Betätigungselements an einem zweiten Endabschnitt des Schalthebels angreift, der sich auf der dem ersten Endabschnitt gegenüberliegenden Seite eines Schwenklagers des Schalthebels befindet. Diese Ausgestaltung bietet insbesondere in kinematischer Hinsicht Vorteile. Der Schalthebel ermöglicht eine günstige Kraftübertragung auf das Schließteil des Pilotventils. Die für das Schließen des Pilotventils erforderliche Kraft kann durch entsprechende Auslegung der Hebelarme des Schalthebels auf eine relativ geringe Kraft minimiert werden. Somit kann dann auch die auf das Betätigungselement wirkende Federkraft minimiert werden, wodurch sich schließlich die erforderliche Kraft zur Bewegung des Betätigungselements gegen die Federkraft entsprechend verringert.

Nach einer weiteren bevorzugten Ausgestaltung des erfindungsgemäßen Servoventils ist das Schließteil des Pilotventils aus einem Stößel gebildet, der mit einem dichtenden Gleitring versehen ist. Das Pilotventil zeichnet sich in diesem Fall durch einen einfachen konstruktiven Aufbau mit zuverlässiger Abdichtwirkung und eine vorteilhafte Leichtgängigkeit aus.

Eine weitere bevorzugte Ausgestaltung des erfindungsgemäßen Servoventils sieht vor, dass das Ventilgehäuse ein Gehäuseunterteil und einen damit verbundenen Gehäusedeckel aufweist, wobei in dem Gehäusedeckel eine Reinigungsnadel fixiert ist, die durch die Steueröffnung ragt. Diese Ausgestaltung verhindert zuverlässig eine Verstopfung der Steueröffnung.

Eine weitere vorteilhafte Ausgestaltung des erfindungsgemäßen Servoventils ist dadurch gekennzeichnet, dass die Membran eine Aufnahme aufweist, in der eine Dichtungsfassung formschlüssig aufgenommen ist, wobei die Dichtungsfassung mindestens ein Führungselement aufweist, das in eine von dem Ventilsitz umgebene Durchgangsöffnung ragt. Das in die Durchgangsöffnung ragende Führungselement kann dabei zugleich eine Drosselfunktion (Dämpfungsfunktion) übernehmen, die beim Schließen des Servoventils ein Auftreten von Druckschlägen im Wassernetz verhindert oder zumindest verringert.

Für eine kompakte Ausführung des erfindungsgemäßen Servoventils ist es vorteilhaft, wenn gemäß einer weiteren bevorzugten Ausgestaltung die Dichtungsfassung eine mit der Steueröffnung fluchtende Führungsbohrung aufweist, wobei die Reinigungsnadel dann ebenfalls durch die Führungsbohrung ragt.

Eine weitere vorteilhafte Ausgestaltung des erfindungsgemäßen Servoventils umfasst ein zusätzliches, elektrisch auslösbares Pilotventil, wobei die Steuerkammer über eine zweite Steueröffnung mit dem Eingangskanal kommuniziert und zu ihrer Druckentlastung über das elektrisch auslösbare Pilotventil, das ein drittes Schließteil aufweist, mit einer zweiten Druckentlastungskammer in Verbindung steht, die über einen zweiten Druckentlastungskanal mit dem Ausgangskanal kommuniziert, wobei das dritte Schließteil mit einem elektromagnetischen Stellglied gekoppelt ist. Diese Ausgestaltung ermöglicht wahlweise eine manuelle Auslösung als auch eine elektrische Auslösung des erfindungsgemäßen Servoventils.

Nachfolgend wird die Erfindung anhand einer mehrere Ausführungsbeispiele darstellenden Zeichnung näher erläutert. Es zeigen:
- Fig. 1: eine Vorderansicht eines erfindungsgemäßen Servoventils in seiner Ausgangsstellung (Schließstellung);
- Fig. 2: das Servoventil der Fig. 1 in Seitenansicht mit Sicht auf seinen Eingangsanschluss;
- Fig. 3: eine vertikale Schnittansicht des Servoventils entlang der Schnittlinie III-III in Fig. 2;
- Fig. 4: eine in dem Servoventil eingebaute Rollmembran in perspektivischer Darstellung;
- Fig. 5: eine in dem Servoventil eingebaute Dichtungsfassung in perspektivischer Darstellung;
- Fig. 6: das Servoventil der Fig. 1 in Seitenansicht mit Sicht auf seinen Ausgangsanschluss;
- Fig. 7: das Servoventil in der Ansicht gemäß Fig. 6, jedoch hier in einer Betätigungsstellung;
- Fig. 8: das Servoventil in der Ansicht gemäß Fig. 1, in Betätigungsstellung;
- Fig. 9: das Servoventil in der Ansicht gemäß Fig. 2, in Betätigungsstellung;
- Fig. 10: eine vertikale Schnittansicht des Servoventils entlang der Schnittlinie X-X in Fig. 9; und
- Fig. 11: ein weiteres Ausführungsbeispiel eines erfindungsgemäßen Servoventils in Ausgangsstellung und in perspektivischer Darstellung.

Das in der Zeichnung dargestellte Servoventil ist insbesondere als Druckspüler für Urinale und WC-Becken bestimmt. Das servogesteuerte Ventil weist ein Gehäuse auf, das aus einem Gehäuseunterteil 1 und einem damit lösbar verbundenen Gehäuseoberteil oder Deckel 2 zusammengesetzt ist. Das Gehäuseunterteil 1 und das Gehäuseoberteil 2 definieren eine Steuerkammer (Druckkammer) 3 und eine Ventilkammer 4, die durch eine zwischen Gehäuseunterteil 1 und Gehäuseoberteil (Deckel) 2 dichtend eingespannte Membran 5 voneinander getrennt sind. Die Membran 5 besteht vorzugsweise aus Gummi oder einem gummielastischen Werkstoff. Sie kann auch als Rollmembran bezeichnet werden.

Das Gehäuseunterteil 1 weist einen Eingangskanal 1.1 auf, der über eine Querbohrung 1.2 in die Ventilkammer 4 und an seinem anderen Ende an einem stutzenförmigen Eingangsanschluss 1.3 mündet. Ferner weist das Gehäuseunterteil 1 einen Ausgangskanal 1.4 auf, der über eine Querbohrung 1.5 an der Ventilkammer 4 angeschlossen ist und an einem stutzenförmigen Ausgangsanschluss 1.6 mündet. Zwischen dem Eingangskanal 1.1 und dem Ausgangskanal 1.4 ist ein Ventilsitz 1.7 angeordnet, der durch ein (erstes) bewegliches Schließteil verschließbar ist. Das Schließteil ist aus der Membran (Rollmembran) 5 und einer Dichtungsfassung 6 gebildet. Die Dichtungsfassung 6 besteht beispielsweise aus einem Kunststoff-Spritzgießteil. Die Membran 5 weist eine Aufnahme 5.1, vorzugsweise in Form eines Durchgangslochs auf, an der sie formschlüssig mit der Dichtungsfassung 6 verbunden ist. Die Dichtungsfassung 6 weist hierzu eine Hinterschneidung 6.1 auf, in welche die Membran 5 formschlüssig eingreift.

In der Membran 5 ist eine kleine Steueröffnung 5.2 ausgebildet, welche die Ventilkammer 4 mit der Steuerkammer 3 verbindet. Die Dichtungsfassung 6 weist eine Führungsbohrung (Durchgangsbohrung) 6.2 auf, die fluchtend mit der Steueröffnung 5.2 ausgerichtet ist. In dem Gehäusedeckel 2 ist eine Reinigungsnadel 7 fixiert ist, die durch die Führungsbohrung 6.2 und die damit fluchtende Steueröffnung 5.2 ragt. Die Spitze der Reinigungsnadel 7 kann gegebenenfalls auch etwas in die Ventilkammer (Ringnut) 4 hineinragen.

Die Ventilkammer 4 ist von einem Ringkanal 8 umgeben, so dass zwischen der Ventilkammer 4 und dem Ringkanal 8 ein ringförmiger, geschlossener Steg 1.8 als Dichtungsauflage für die Membran 5 definiert ist. An der Unterseite des Gehäusedeckels 2 ist ebenfalls ein ringförmiger, geschlossener Steg 2.10 ausgebildet. Die Membran 5 ist zwischen den beiden Stegen 1.8, 2.10 eingeklemmt.

Die Dichtungsfassung 6 weist zudem ein zapfenförmiges Führungselement 6.3 auf, das mit radialem Spiel in die Querbohrung 1.2 des Eingangskanals 1.1 ragt. An dem Zapfen 6.3 sind radial vorstehende Führungsrippen 6.4 ausgebildet.

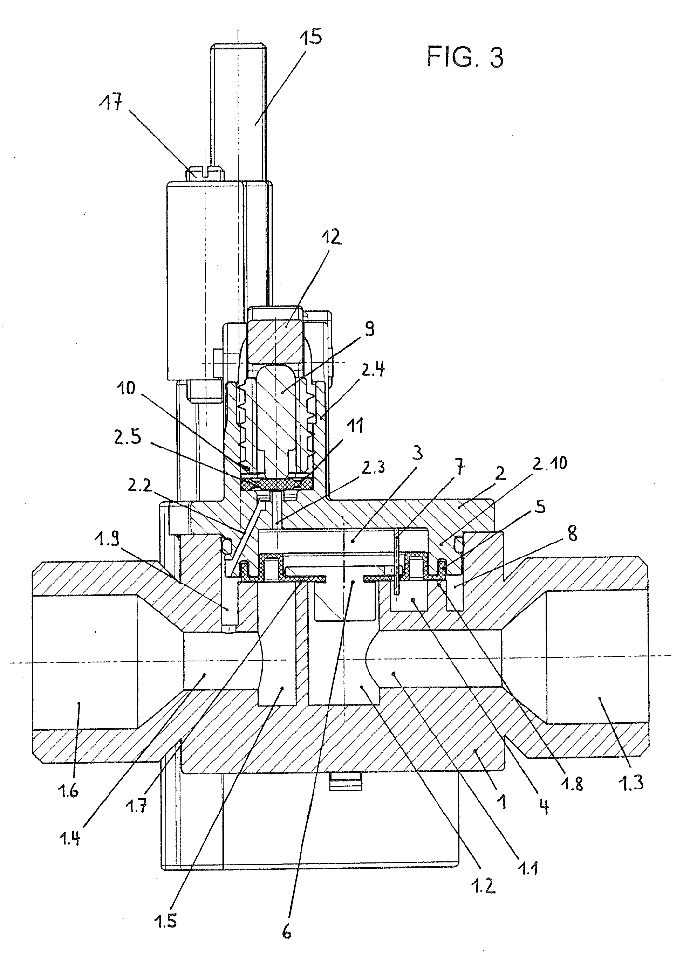

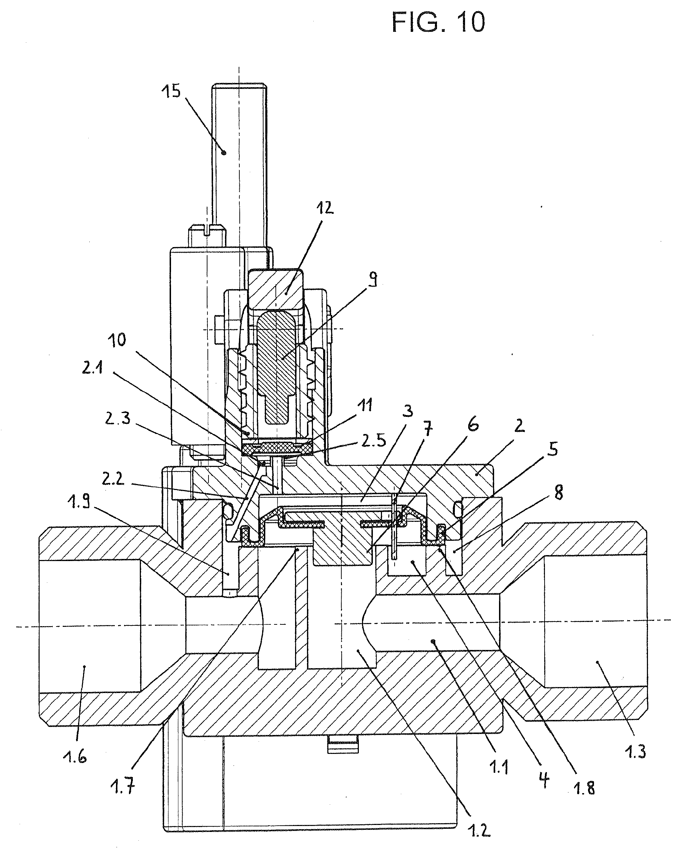

Der Ventilsitz 1.7 begrenzt die in die Ventilkammer 4 mündende Bohrung 1.2 und ist vorzugsweise in Form eines umlaufenden Kragens ausgebildet (vgl. Fig. 10). Der kragenförmige Ventilsitz 1.7 ist durch die Querbohrung 1.2 des Eingangskanals und eine im Gehäuseunterteil 1 ausgebildete Ringnut definiert. Die Ringnut stellt die Ventilkammer 4 dar. Die Querbohrung 1.5 des Ausgangskanals mündet in diese Ringnut 4. Der Durchmesser bzw. die Querschnittsfläche der Bohrung 1.2 ist deutlich größer als der Durchmesser bzw. die Querschnittsfläche der zum Ausgangsanschluss führenden Bohrung 1.5 (siehe Figuren 3 und 10).

Im geschlossenen Zustand des Servoventils steht der Flüssigkeits- bzw. Wasserdruck am Eingangskanal 1.1 an, wobei die Membran 5 dichtend auf dem Ventilsitz 1.7 liegt. In der Steuerkammer 3 herrscht im geschlossenen Zustand des Servoventils der gleiche Wasserdruck wie im Eingangskanal 1.1 und in der Ventilkammer 4.

Die Steuerkammer 3 ist über ein Pilotventil, das ein zweites Schließteil 9 aufweist, mit einer Druckentlastungskammer 2.1 verbunden, die über einen Druckentlastungskanal 2.2 im Gehäuseoberteil 2 und eine Entlastungsbohrung 1.9 im Gehäuseunterteil 1 mit dem Ausgangskanal 1.4 kommuniziert. Die Steuerkammer 3 ist dabei über eine Bohrung (Pilotöffnung) 2.3 mit der Druckentlastungskammer 2.1 verbunden.

Das Schließteil 9 des Pilotventils ist aus einem Stößel gebildet. Der Stößel 9 ist in einem zylindrischen Ansatz 2.4 des Gehäuseoberteils 2 eingesetzt und mit mindestens einem dichtenden Gleitring 10 versehen. Der Gleitring 10 liegt dichtend an der Innenseite des zylindrischen Ansatzes 2.4 an und ist beispielsweise in einer in der Mantelfläche des Stößels 9 ausgebildeten Ringnut gehalten. An dem der Pilotöffnung 2.3 zugewandten Ende ist der Stößel 9 mit einer Dichtung 11 versehen, die vorzugsweise gummielastisch ausgebildet ist. Am Boden des Ansatzes 2.4 ist eine die Pilotöffnung 2.3 umgebende Dichtfläche 2.5 ausgebildet.

Der Stößel 9 des Pilotventils ist mit einem Schalthebel 12 gekoppelt. Der Schalthebel 12 ist in einer gabelförmigen Halterung 2.6 schwenkbar gelagert. Die durch die Schwenkachse 2.61 des Schwenklagers definierten Abschnitte 12.1, 12.2 des Schalthebels 12 sind unterschiedlich lang. Der Stößel 9 des Pilotventils greift am Ende des wesentlich kürzeren Abschnitts 12.1 des Schalthebels an. Dem längeren Abschnitt 12.2 des Schalthebels 12 ist ein Betätigungselement 13 zugeordnet. Das Betätigungselement 13 ist länglich, im Wesentlichen stangenförmig ausgeführt.

Das Betätigungselement 13 ist in Richtung seiner Längsachse an einer mit dem Ventilgehäuse 1 verbundenen Halterung 1.10 verschiebbar geführt. Die Halterung 1.10 umfasst einen plattenförmigen Abschnitt, der mit einem das Betätigungselement 13 formschlüssig umgreifenden oder in anderer Weise führenden Führungsabschnitt 1.12 versehen ist. Das Betätigungselement 13 weist einen Vorsprung oder Absatz 13.1 auf, der eine Schaltfläche 13.2 definiert. Das Betätigungselement 13 greift in seiner Ausgangsstellung, d.h. bei geschlossenem Servoventil, mit der Schaltfläche 13.2 am Ende des längeren Abschnitts 12.2 des Schalthebels 12 an.

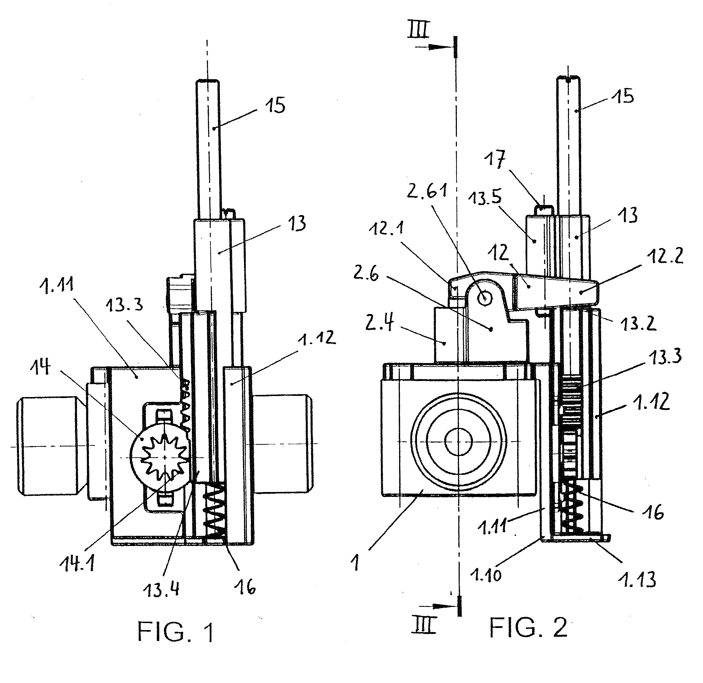

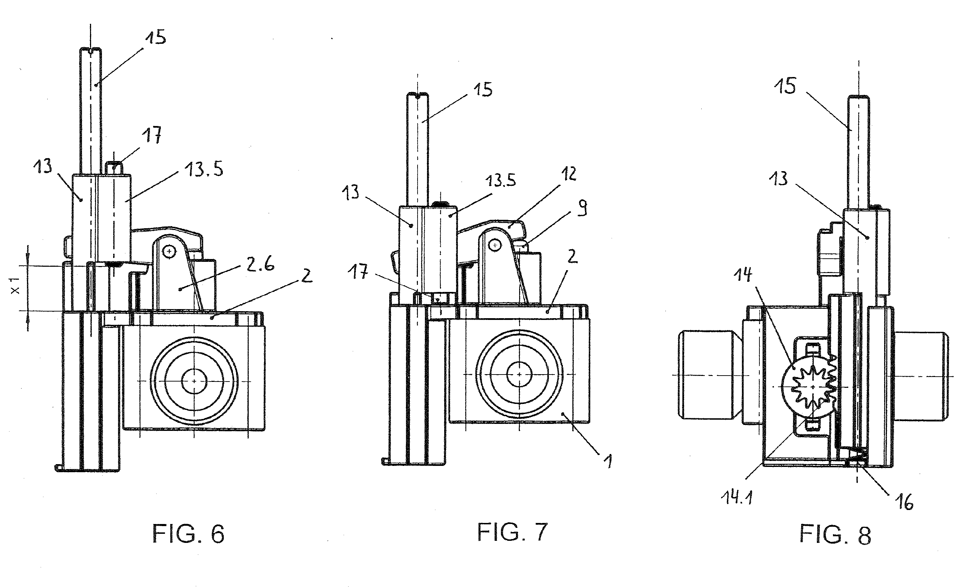

Des Weiteren ist das Betätigungselement 13 mit einer Verzahnung 13.3 versehen, die sich entlang eines Teilabschnitts des Betätigungselements 13 erstreckt. Durch Längsverschieben des Betätigungselements 13 im Führungsabschnitt 1.12 der Halterung 1.10 relativ zu dem Ventilgehäuse 1 wird die Verzahnung (Zahnstange) 13.3 des Betätigungselements 13 mit einem Ritzel 14.1 eines Rotationsdämpfers 14 in Eingriff gebracht. Unterhalb der Verzahnung 13.3 weist das Betätigungselement einen verzahnungsfreien Bereich 13.4 auf, der sich in der Ausgangsstellung des Betätigungselements 13 auf Höhe des Ritzels 14.1 befindet (vgl. Figuren 1 und 8).

Ferner weist das Betätigungselement 13 eine Gewindebohrung auf. In die Gewindebohrung ist eine Gewindestange 15 eingedreht, die eine an der Halterung 1.10 abgestützte Feder 16 einspannt. Die Halterung 1.10 weist hierzu beispielsweise einen von dem plattenförmigen Abschnitt 1.11 im Wesentlichen rechtwinklig abstehenden Steg 1.13 auf. Der Steg 1.13 geht vorzugsweise in den Führungsabschnitt 1.12 über oder ist mit diesem fest verbunden. Bei der Feder 16 handelt es sich vorzugsweise um eine Schraubenfeder. Zur radialen Festlegung der Feder 16 können an dem Steg 1.13 und/oder an der Gewindestange 15 Zapfen und/oder die Enden der Feder 16 aufnehmende Vertiefungen vorgesehen sein.

Außerdem ist das Betätigungselement 13 mit einer Stellschraube 17 versehen. Hierzu ist an dem Betätigungselement 13 eine Stellschrauben-Halterung 13.5 angebracht oder angeformt. Die Drehachse der Stellschraube 17 verläuft im Wesentlichen parallel zur Drehachse der der Gewindestange 15, wobei der Gehäusedeckel 2 einen Anschlag für die Stellschraube 17 darstellt. Mittels der Stellschraube 17 wird die Eindrücktiefe X1 des stangenförmigen Betätigungselements 13 eingestellt (vgl. Fig. 6).

Der an dem plattenförmigen Abschnitt 1.11 der Halterung 1.10 angebrachte Rotationsdämpfer 14 bremst die Rückstellbewegung des federbelasteten Betätigungselements 13, wenn dieses niedergedrückt wurde und sodann losgelassen wird. Der Rotationsdämpfer 14 ist mit einem viskosen Medium, beispielsweise Silikonöl gefüllt. Die viskose Flüssigkeit wird durch einen Drosselspalt oder eine Drosselöffnung geleitet. Die Dämpfungsrate (Bremsmoment) ist abhängig von der Viskosität der Flüssigkeit und der freien Querschnittsfläche der Drossel.

Als Rotationsdämpfer 14 kann bei dem erfindungsgemäßen Servoventil insbesondere ein Rotationsdämpfer mit kontinuierlichem Bremsmoment zur Anwendung kommen. Bei einem solchen Rotationsdämpfer wird durch Scherung dünner Silikonölschichten zwischen den einander zugewandten Flächen eines Rotors und eines Stators eine Flüssigkeitsdämpfung erzeugt. Eine Dämpfung ist dabei in beide Drehrichtungen möglich. Der Spalt zwischen Rotor und Stator und damit die Dämpfungsrate lässt sich durch Verschieben des Stators einstellen.

Alternativ kann es sich bei dem Rotationsdämpfer 14 des erfindungsgemäßen Servoventils auch um einen alternierenden Rotationsdämpfer handeln. Ein solcher Rotationsdämpfer weist zwei gegenüberliegende Kammern auf, in die jeweils ein Flügelabschnitt eines um einen gewissen Arbeitswinkel drehbaren Flügels hineinragt. Durch alternierendes Drehen (Schwenken) wird die viskose Flüssigkeit durch Bohrungen, deren freie Querschnittsfläche einstellbar ist, von einer Kammer in die andere Kammer gepresst. Eine Dämpfung der Drehbewegung ist dabei in beide Drehrichtungen möglich. Vorzugsweise enthält der alternierende Rotationsdämpfer jedoch Ventile, um eine Dämpfung in nur einer Drehrichtung zu erzielen.

Nachfolgend wird die Funktion des erfindungsgemäßen Servoventils erläutert:
Die Feder 16 drückt das stangenförmige Betätigungselement 13 gegen den Schalthebel 12. Dieser drückt den Stößel 9 auf die Dichtung 11, wodurch die im Deckel 2 ausgebildete Pilotöffnung 2.3 des Pilotventils (Entlastungsventils) geschlossen wird. Ist am Eingangsanschluss 1.3 ein gewisser Wasserdruck vorhanden, so strömt bei geschlossener Pilotöffnung 2.3 das Wasser durch die Steueröffnung 5.2 der Rollmembran 5 in den Raum 3 hinter der Rollmembran und drückt diese gegen den Ventilsitz 1.7. Das Servoventil ist somit geschlossen.

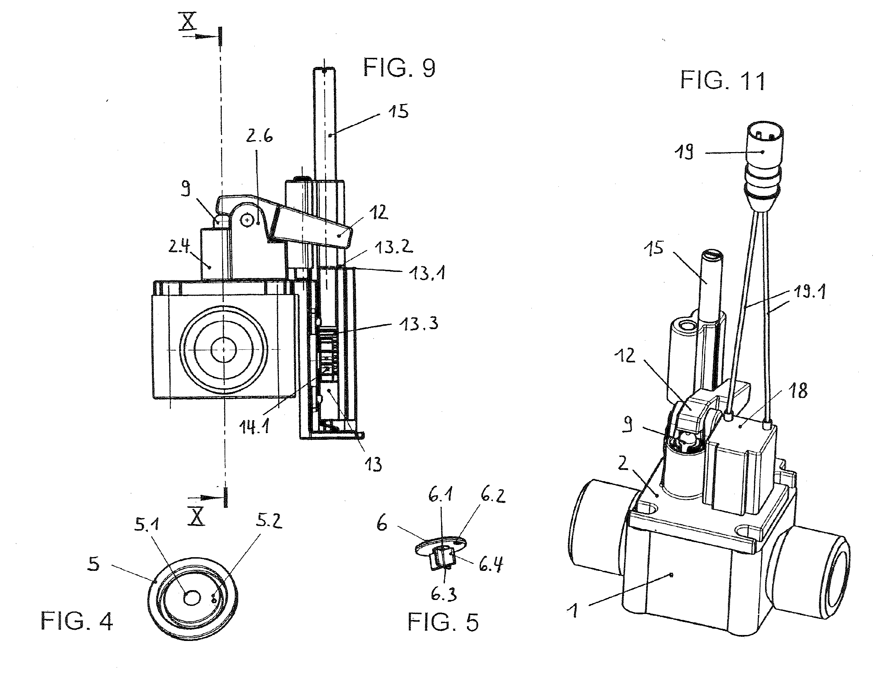

Zum Öffnen des Servoventils wird das stangenförmige Betätigungselement 13 über die Gewindestange 15 heruntergedrückt bis die Stellschraube 17 gegen den Deckel 2 stößt (vgl. Figuren 2 und 9). Dabei entfernt sich die Schaltfläche 13.2 vom Schalthebel 12 und gibt diesen frei. Der Stößel 9 ist damit nicht gedrückt und die dem Stößel 9 zugeordnete Dichtung 11 löst sich von der die Pilotöffnung 2.3 umgebenden Dichtfläche 2.5 ab. Der Raum hinter der Rollmembran 5, d.h. die Steuerkammer 3 wird dadurch über die Pilotöffnung 2.3, den Entlastungskanal 2.2, den Ringkanal 8 und die Entlastungsbohrung (Verbindungsöffnung) 1.9 zum Ausgangsanschluss 1.6 hin druckentlastet. Die Rollmembran 5 wird sodann vom Ventilsitz 1.7 fortgedrückt und das Servoventil somit geöffnet.

Nach dem Drücken des stangenförmigen Betätigungselements 13 greift die Verzahnung 13.3 in das Ritzel 14.1 des Rotationsdämpfers 14. Die Feder 16 drückt schließlich die Gewindestange 15 und damit das Betätigungselement 13 bewegungsgedämpft zurück in die Ausgangsstellung. Die Eindrücktiefe X1 bzw. die gedämpfte Weglänge des Betätigungselements 13 bestimmt die Verzögerungszeit bis das Servoventil geschlossen werden kann.

Kurz vor Erreichen der Ausgangsposition des Betätigungselements 13 verlässt die Verzahnung 13.3 das Ritzel 14.1 und schnellt in die Ausgangsposition zurück. Die Kraft der Feder 16 wird über die Schaltfläche 13.2 des Betätigungselements 13 auf den Schalthebel 12 übertragen. Der Schalthebel 12 drückt dadurch den Stößel 9 auf die Dichtung 11 und verschließt somit die Pilotöffnung 2.3. Wasser strömt nun durch die Steueröffnung 5.2 in den Raum 3 hinter der Rollmembran 5 und drückt dieses gegen den Ventilsitz 1.7. Das Servoventil ist damit wieder geschlossen.

In Fig. 11 ist ein Ausführungsbeispiel dargestellt, bei dem an dem erfindungsgemäßen Servoventil zusätzlich ein elektrisches Pilotventil 18 angebracht ist. Dieses zusätzliche elektrische Pilotventil 18 kann den Raum 3 hinter der Rollmembran über eine zusätzliche (nicht dargestellte) Pilotöffnung und einen zusätzlichen Entlastungskanal in den Ringkanal 8 entlasten. Dadurch ist eine Kombination aus manueller und elektrischer Auslösung möglich. Mit 19 ist ein elektrischer Anschlussstecker mit elektrischen Steuerleitungen 19.1 zur Ansteuerung des elektrischen Pilotventils 18 bezeichnet.

Die Ausführung der Erfindung ist nicht auf die in der Zeichnung dargestellten Ausführungsbeispiele beschränkt. Vielmehr sind zahlreiche Varianten denkbar, die auch bei einer von den dargestellten Ausführungsbeispielen abweichenden Gestaltung von der in den beiliegenden Ansprüchen angegebenen Erfindung Gebrauch machen.

## Patentansprüche

1. Manuell zu betätigendes Servoventil für Flüssigkeiten, insbesondere zur Druckspülung einer Toilettenschüssel oder eines Urinals, mit einem Ventilgehäuse (1, 2) und einem zwischen einem Eingangskanal (1.1) und einem Ausgangskanal (1.4) angeordneten Ventilsitz (1.7), der durch ein vorzugsweise aus einer Membran (5) gebildetes erstes Schließteil verschließbar ist, und mit einer Steuerkammer (3), die über eine Steueröffnung (5.2) mit dem Eingangskanal (1.1) kommuniziert und die zu ihrer Druckentlastung über ein Pilotventil, das ein zweites Schließteil (9) aufweist, mit einer Druckentlastungskammer (2.1) in Verbindung steht, die über einen Druckentlastungskanal (2.2) mit dem Ausgangskanal (1.4) kommuniziert, wobei das zweite Schließteil (9) mit einem Betätigungselement (13) gekoppelt ist, das bewegbar an dem Ventilgehäuse (1) gehalten und durch eine Feder (16) beaufschlagt ist, welche das Betätigungselement (13) in eine Ausgangsstellung vorspannt, wobei an dem Betätigungselement (13) ein Stellelement (15, 17) gehalten ist, mittels dem sich ein Wegmaß des Betätigungselements (13) einstellen und/oder die Feder (16) spannen lässt, wobei das Betätigungselement mit einem gegen die Kraft der Feder (16) wirkenden Bewegungsdämpfer (14) gekoppelt ist, und wobei der Bewegungsdämpfer (14) als Rotationsdämpfer ausgebildet ist, **dadurch gekennzeichnet, dass** das Betätigungselement (13) eine Verzahnung (13.3) aufweist, die sich entlang eines Teilabschnitts des Betätigungselements (13) erstreckt und durch Bewegen des Betätigungselements (13) relativ zu dem Ventilgehäuse mit einem mit dem Bewegungsdämpfer (14) drehbar verbundenen Ritzel (14.1) in Eingriff bringbar ist.

2. Servoventil nach Anspruch 1, **dadurch gekennzeichnet, dass** das Betätigungselement (13) länglich ausgebildet ist und in Richtung seiner Längsachse in einer mit dem Ventilgehäuse (1) verbundenen Halterung (1.12) verschiebbar geführt ist.

3. Servoventil nach Anspruch 1, **dadurch gekennzeichnet, dass** das Betätigungselement kreisförmig ausgebildet und in einer mit dem Ventilgehäuse (1) verbundenen Halterung dreh- oder schwenkbar geführt ist.

4. Servoventil nach einem der Ansprüche 1 bis 3, **dadurch gekennzeichnet, dass** das Betätigungselement (13) neben der Verzahnung (13.3) einen verzahnungsfreien Bereich (13.4) aufweist, der sich in der Ausgangsstellung des Betätigungselements (13) auf Höhe des Ritzels (14.1) befindet.

5. Servoventil nach einem der Ansprüche 1 bis 4, **dadurch gekennzeichnet, dass** das Stellelement aus einer Stellschraube (17) gebildet ist, die in eine Gewindebohrung eingeschraubt ist, die in einer mit dem Betätigungselement (13) verbundenen Stellschrauben-Halterung (13.5) ausgebildet ist.

6. Servoventil nach einem der Ansprüche 1 bis 5, **dadurch gekennzeichnet, dass** das Betätigungselement (13) eine Gewindebohrung aufweist, in die eine an der Feder (16) angreifende Gewindestange (15) eingedreht ist.

7. Servoventil nach einem der Ansprüche 1 bis 6, **dadurch gekennzeichnet, dass** der Bewegungsdämpfer (14) eine Einstellvorrichtung zur Veränderung seiner Dämpfungsrate aufweist.

8. Servoventil nach einem der Ansprüche 1 bis 7, **dadurch gekennzeichnet, dass** der Bewegungsdämpfer (14) als alternierend wirkender Bewegungsdämpfer ausgeführt ist.

9. Servoventil nach einem der Ansprüche 1 bis 8, **dadurch gekennzeichnet, dass** das Schließteil (9) des Pilotventils über einen schwenkbar gelagerten Schalthebel (12) mit dem Betätigungselement gekoppelt ist, wobei das Schließteil (9) des Pilotventils an einem ersten Endabschnitt (12.1) des Schalthebels (12) angreift, und wobei an dem Betätigungselement (13) eine Schaltfläche (13.2) ausgebildet ist, die in der Ausgangsstellung des Betätigungselements (13) an einem zweiten Endabschnitt (12.2) des Schalthebels (12) angreift, der sich auf der dem ersten Endabschnitt (12.1) gegenüberliegenden Seite eines Schwenklagers (2.6) des Schalthebels (12) befindet.

10. Servoventil nach einem der Ansprüche 1 bis 9, **dadurch gekennzeichnet, dass** das Schließteil (9) des Pilotventils aus einem Stößel gebildet ist, der mit einem dichtenden Gleitring versehen ist.

11. Servoventil nach einem der Ansprüche 1 bis 10, **dadurch gekennzeichnet, dass** das Ventilgehäuse (1, 2) ein Gehäuseunterteil (1) und einen damit verbundenen Gehäusedeckel (2) aufweist, wobei in dem Gehäusedeckel (2) eine Reinigungsnadel (7) fixiert ist, die durch die Steueröffnung (5.2) ragt.

12. Servoventil nach einem der Ansprüche 1 bis 11, **dadurch gekennzeichnet, dass** die Membran (5) eine Aufnahme (5.1) aufweist, in der eine Dichtungsfassung (6) formschlüssig aufgenommen ist, wobei die Dichtungsfassung (6) mindestens ein Führungselement (6.3, 6.4) aufweist, das in eine von dem Ventilsitz (1.7) umgebene Durchgangsöffnung (1.2) ragt.

13. Servoventil nach den Ansprüchen 11 und 12, **dadurch gekennzeichnet, dass** die Dichtungsfassung (6) eine mit der Steueröffnung (5.2) fluchtende Führungsbohrung (6.2) aufweist, wobei die Reinigungsnadel (7) ebenfalls durch die Führungsbohrung (6.2) ragt.

14. Servoventil nach einem der Ansprüche 1 bis 13, **gekennzeichnet durch** ein zusätzliches, elektrisch auslösbares Pilotventil (18), wobei die Steuerkammer (3) über eine zweite Steueröffnung mit dem Eingangskanal kommuniziert und zu ihrer Druckentlastung über das elektrisch auslösbare Pilotventil (18), das ein drittes Schließteil aufweist, mit einer zweiten Druckentlastungskammer in Verbindung steht, die über einen zweiten Druckentlastungskanal mit dem Ausgangskanal (1.4) kommuniziert, wobei das dritte Schließteil mit einem elektromagnetischen Stellglied gekoppelt ist.

## Claims

1. Manually operated servo valve for liquids, in particular for flushing a toilet or urinal, comprising a valve housing (1, 2) and a valve seat (1.7) which is arranged between an inlet duct (1.1) and an outlet duct (1.4) and can be closed by a first closing part that is preferably formed by a membrane (5), and comprising a control chamber (3) which is in communication with the inlet duct (1.1) by means of a control opening (5.2) and, so as to relieve the pressure therein, is connected to a pressure-relief chamber (2.1) by a pilot valve having a second closing part (9), which pressure-relief chamber is in communication with the outlet duct (1.4) by means of a pressure-relief duct (2.2), the second closing part (9) being coupled to an actuation element (13) which is movably retained on the valve housing (1) and is loaded by a spring (16), which pretensions the actuation element (13) into a starting position, an adjustment member (15, 17) being retained on the actuation element (13), by means of which a distance covered by the actuation element (13) can be set and/or the spring (16) can be tensioned, the actuation element being coupled to a motion damper (14) acting against the force of the spring (16), and the motion damper (14) being designed as a rotary damper, **characterised in that** the actuation element (13) comprises a toothing (13.3) which extend along a portion of the actuation element (13) and can be brought into engagement with a pinion (14.1) that is rotatably connected to the motion damper (14) by moving the actuation element (13) relative to the valve housing.

2. Servo valve according to claim 1, **characterised in that** the actuation element (13) is elongate and is movably guided in a support (1.12) connected to the valve housing (1) in the direction of its longitudinal axis.

3. Servo valve according to claim 1, **characterised in that** the actuation element is circular and is rotatably or pivotally guided in a support connected to the valve housing (1).

4. Servo valve according to any of claims 1 to 3, **characterised in that** the actuation element (13) comprises a tooth-free region (13.4) beside the toothing (13.3), which tooth-free region is located at the level of the pinion (14.1) in the starting position of the actuation element (13).

5. Servo valve according to any of claims 1 to 4, **characterised in that** the adjustment member is formed by an adjusting screw (17), which is screwed into a threaded hole made in an adjusting-screw holder (13.5) connected to the actuation element (13).

6. Servo valve according to any of claims 1 to 5, **characterised in that** the actuation element (13) comprises a threaded hole into which a threaded rod (15) acting on the spring (16) is screwed.

7. Servo valve according to any of claims 1 to 6, **characterised in that** the motion damper (14) comprises an adjusting device for changing the damping rate thereof.

8. Servo valve according to any of claims 1 to 7, **characterised in that** the motion damper (14) is designed as an alternately acting motion damper.

9. Servo valve according to any of claims 1 to 8, **characterised in that** the closing part (9) of the pilot valve is coupled to the actuation element by means of a pivotally mounted control lever (12), the closing part (9) of the pilot valve acting on a first end portion (12.1) of the control lever (12), and a control surface (13.2) being formed on the actuation element (13) which acts on a second end portion (12.2) of the control lever (12) in the starting position of the actuation element (13), which second end portion is located on the side of a pivot bearing (2.6) of the control lever (12) opposite the first end portion (12.1).

10. Servo valve according to any of claims 1 to 9, **characterised in that** the closing part (9) of the pilot valve is formed by a push rod, which is provided with a sealing slide ring.

11. Servo valve according to any of claims 1 to 10, **characterised in that** the valve housing (1, 2) comprises a lower housing part (1) and a housing cover (2) connected thereto, a cleaning needle (7) being fastened in the housing cover (2) that projects through the control opening (5.2).

12. Servo valve according to any of claims 1 to 11, **characterised in that** the membrane (5) comprises a receiving portion (5.1), in which a sealing cap (6) is received in an interlocking manner, the sealing cap (6) comprising at least one guiding element (6.3, 6.4), which projects into a through-opening (1.2) surrounded by the valve seat (1.7).

13. Servo valve according to claims 11 and 12, **characterised in that** the sealing cap (6) comprises a guide hole (6.2) that is flush with the control opening (5.2), the cleaning needle (7) likewise projecting through the guide hole (6.2).

14. Servo valve according to any of claims 1 to 13, **characterised by** an additional, electrically activatable pilot valve (18), the control chamber (3) being in communication with the inlet duct by means of a second control opening and, so as to relieve the pressure therein, being connected to a second pressure-relief chamber by means of the electrically activatable pilot valve (18), which comprises a third closing part, which chamber is in communication with the outlet duct (1.4) by means of a second pressure-relief duct, the third closing part being coupled to an electromagnetic actuator.

## Revendications

1. Servosoupape à actionnement manuel pour liquides, en particulier pour le rinçage par pression d'une cuve de WC ou d'un urinoir, avec un boîtier de soupape (1, 2) et un siège de soupape (1.7), qui, disposé entre un canal d'entrée (1.1) et un canal de sortie (1.4), peut être fermé au moyen d'une première pièce de fermeture, qui est formée, de préférence par une membrane (5), et avec une chambre de commande (3), qui est en communication avec le canal d'entrée (1.1) par l'intermédiaire d'une ouverture de commande (5.2) et qui, pour sa décharge de pression, est, par l'intermédiaire d'une soupape pilote dotée d'une deuxième pièce de fermeture (9), en communication avec une chambre de décharge de pression (2.1), qui est en communication avec le canal de sortie (1.4) par l'intermédiaire d'un canal de décharge de pression (2.2), sachant que la deuxième pièce de fermeture (9) est couplée avec un élément d'actionnement (13) qui est maintenu, mobile, dans le boîtier de soupape (1) et est soumis à l'action d'un ressort (16), qui précontraint ledit élément d'actionnement (13) dans une position de départ, sachant que, sur l'élément d'actionnement (13), est maintenu un élément de réglage (15, 17) au moyen duquel il est possible de régler une mesure de course de l'élément d'actionnement (13) et / ou de serrer le ressort (16), l'élément d'actionnement étant couplé avec un amortisseur de mouvement (14), qui agit contre la force du ressort (16), et sachant que l'amortisseur de mouvement (14) est réalisé sous la forme d'un amortisseur de rotation, **caractérisée en ce que** l'élément d'actionnement (13) est doté d'une denture (13.3) qui s'étend le long d'une section partielle de l'élément d'actionnement (13) et qui, par déplacement de l'élément d'actionnement (13) par rapport au boîtier de soupape, peut être mise en prise avec un pignon (14.1), qui est relié à rotation à l'amortisseur de mouvement (14).

2. Servosoupape selon la revendication 1,
**caractérisée en ce que** l'élément d'actionnement (13) est de forme allongée et est guidé, coulissant dans la direction de son axe longitudinal, dans un support (1.12), qui est relié au boîtier de soupape (1).

3. Servosoupape selon la revendication 1,
**caractérisée en ce que** l'élément d'actionnement est réalisé en forme de cercle et est guidé, rotatif ou pivotant, dans un support, qui est relié au boîtier de soupape (1).

4. Servosoupape selon l'une des revendications 1 à 3,
**caractérisée en ce que** l'élément d'actionnement (13) est doté, à côté de la denture (13.3), d'une zone exempte de denture (13.4), qui, dans la position de départ de l'élément d'actionnement (13), est située à la hauteur du pignon (14.1).

5. Servosoupape selon l'une des revendications 1 à 4,
**caractérisée en ce que** l'élément de réglage est formé par une vis de réglage (17), qui est vissée dans un trou fileté, qui est pratiqué dans un support de vis de réglage (13.5) relié à l'élément d'actionnement (13).

6. Servosoupape selon l'une des revendications 1 à 5,
**caractérisée en ce que** l'élément d'actionnement (13) est doté d'un trou fileté, dans lequel est vissée une tige filetée (15) qui attaque le ressort (16).

7. Servosoupape selon l'une des revendications 1 à 6,
**caractérisée en ce que** l'amortisseur de mouvement (14) est doté d'un dispositif de réglage pour la modification de son taux d'amortissement.

8. Servosoupape selon l'une des revendications 1 à 7,
**caractérisée en ce que** l'amortisseur de mouvement (14) est réalisé en tant qu'amortisseur de mouvement à effet alternant.

9. Servosoupape selon l'une des revendications 1 à 8,
**caractérisée en ce que** la pièce de fermeture (9) de la soupape pilote est couplée avec l'élément d'actionnement par l'intermédiaire d'un levier de commutation (12), monté à pivotement, sachant que la pièce de fermeture (9) de la soupape pilote attaque une première section finale (12.1) du levier de commutation (12), et sachant que, sur l'élément d'actionnement (13), est formée une surface de commutation (13.2), qui, dans la position de départ de l'élément d'actionnement (13), attaque une deuxième section finale (12.2) du levier de commutation (12) qui se trouve sur la face d'un palier pivotant (2.6) du levier de commutation (12) opposée à la première section finale (12.1).

10. Servosoupape selon l'une des revendications 1 à 9,
**caractérisée en ce que** la pièce de fermeture (9) de la soupape pilote est formée par un poussoir qui est pourvu d'une bague d'étanchéité glissante.

11. Servosoupape selon l'une des revendications 1 à 10,
**caractérisée en ce que** le boîtier de soupape (1, 2) est doté d'une partie de boîtier inférieure (1) et d'un couvercle de boîtier (2) relié à celui-ci, sachant que, dans le couvercle de boîtier (2), est fixée une aiguille de nettoyage (7), qui fait saillie par l'ouverture de commande (5.2).

12. Servosoupape selon l'une des revendications 1 à 11,
**caractérisée en ce que** la membrane (5) est dotée d'un réceptacle (5.1), dans lequel un socle de joint d'étanchéité (6) est logé en engagement géométrique, sachant que le socle de joint d'étanchéité (6) est doté d'au moins un élément de guidage (6.3, 6.4) qui fait saillie dans un trou de passage (1.2) qui est entouré par le siège de soupape (1.7).

13. Servosoupape selon les revendications 11 et 12,
**caractérisée en ce que** le socle de joint d'étanchéité (6) est doté d'un alésage de guidage (6.2), qui est en alignement avec l'ouverture de commande (5.2), sachant que l'aiguille de nettoyage (7) fait aussi saillie par l'alésage de guidage (6.2).

14. Servosoupape selon l'une des revendications 1 à 13,
**caractérisée en ce que** une soupape pilote supplémentaire (18), actionnable électriquement, sachant que la chambre de commande (3) communique avec le canal d'entrée par l'intermédiaire d'une deuxième ouverture de commande, et, pour sa décharge de pression, est reliée, par l'intermédiaire de la soupape actionnable électriquement (18), qui est dotée d'une troisième pièce de fermeture, à une deuxième chambre de décharge de pression qui communique avec le canal de sortie (1.4) par l'intermédiaire d'un deuxième canal de décharge de pression, sachant que la troisième pièce de fermeture est couplée avec un actionneur électromagnétique.
